# EUROPEAN PATENT APPLICATION

(11) **EP 1 953 671 A1**
(43) Date of publication of application: **06.08.2008**
(21) Application number: 06811518.7
(22) Date of filing: 10.10.2006
(51) Int. Cl.: G06F 21/24, G06K 17/00, G06K 19/10, H04L 9/32

(54) **CONTENT DATA STRUCTURE AND MEMORY CARD**

(30) Priority: 31.10.2005 JP 2005317159
(71) Applicant: MATSUSHITA ELECTRIC INDUSTRIAL CO., LTD., Osaka 571-8501 (JP)
(72) Inventor: SAWADA, Naoto, c/o Matsushita Electric Industrial Co.,Ltd, Intellectual Property Rights Operations Company, IP Development, Osaka 540-6207 (JP)
(74) Representative: Eisenführ, Speiser & Partner
(86) International application number: PCT/JP2006/320205
(87) International publication number: WO 2007/052446

(57) **Abstract**

Content data of the present invention is used by a playback apparatus having a display. The content data has a data structure in which a plurality of pieces of audio data to be played back are associated with pieces of encrypted code information which are created by encrypting with a predetermined algorithm pieces of code information. Each piece of the code information indicates text to be shown on the display at the time of playback of a corresponding piece of the audio data.

## Description

### Technical Field

This invention relates to a data structure of AV (Audio Visual) data, such as music and video/still image content, especially to a technology for protecting copyright.

In recent years, digitalization of music and image data has advanced, and various content can readily be obtained via the Internet and the like. As to recording media, small recording media including MDs (Mini Discs) and memory cards have been developed, which has then increased convenience for users in carrying and storing content having been obtained.
On the other hand, there is a risk that AV data stored on users' recording media is used without authorization-for example, illegal copying of the AV data, and in fact it has been observed that illegal copies go into circulation and the rights of copyright holders are not fully protected.

Especially, memory cards have been widely used particularly for mobile devices due to their characteristics of being very compact and consuming little power in data reading and writing. Memory cards are therefore considered to be more likely to be subject to unauthorized use, and thus ones with copyright protection function have been developed.
One example of such copyright protection technologies is to encrypt AV data and record the encrypted AV data on a memory card and then provide an encryption key to be used for decrypting the AV data only to a playback apparatus when mutual authentication has been successful, whereby preventing the AV data from being decrypted and played back on unauthorized playback apparatuses.

As to memory cards, in addition to such copyright protection function, some technologies have also been developed to facilitate user-friendliness.
They include, for instance, a technology for allowing users to freely set a playback order of music or other types of content and to perform special playback, such as fast-forwarding and rewinding (see Patent Reference 1), as is used in MD and the like, and a technology for storing, as extended data on a memory card, text information relating to the content-e.g. artist names-and displaying the text information on a display of the playback apparatus (see Patent Reference 2).

Thanks to these technologies, memory cards have been rendered quite user-friendly for users.
<Patent Reference 1> Japanese Laid-Open Patent Application No. 2001-249695
<Patent Reference 2> Japanese Laid-Open Patent Application No. 2004-184675

### Disclosure of the Invention

### [Problems that the Invention is to Solve]

However, in terms of copyright protection, while AV data which is music per se is encrypted and then recorded, playback orders, titles and the like are not encrypted since these are control information for improving the user's usability. In addition, extended data, which is not music per se but information related to content, is also not encrypted.
It is however sometimes the case that playback orders and titles of music are also copyright works. Furthermore, information related to content may include descriptions of music, for example, so-called liner notes and artists' messages, and in such a case, the information may need to be protected as a copyright work.

In this view, the present invention aims at offering content data having a data structure capable of protecting not music but literary copyright works, as well as a memory card and a playback apparatus each realizing the similar effect.

### [Means to Solve the Problem]

In order to solve the above-mentioned issue, the content data of the present invention is used by a playback apparatus having a display, and has a data structure in which a plurality of pieces of audio data to be played back are associated with pieces of encrypted code information which are created by encrypting with a predetermined algorithm pieces of code information, each of which indicates text to be shown on the display at the time of playback of a corresponding piece of the audio data.

### [Advantageous Effects of the Invention]

Since the content data of the present invention has the above-mentioned data structure, text information in the content data is encrypted. As a result, in the case when copyright works are included in the text information, it is possible to provide protection for the copyright works.
Here, the pieces of code information may be different for each of the pieces of audio data.

Here, the pieces of code information may be information to be displayed during the period of time of playback of the corresponding piece of the audio data.
Herewith, text information for each piece of the audio data included in the content data can be encrypted, and accordingly copyright protection can be realized for each piece of the audio data.

Here, each of the pieces of code information may correspond to part of text to be displayed at the time of playback of the corresponding piece of the audio data.
Herewith, among the text information of the audio data, only pieces shown to the user on the display can be encrypted, thereby providing more detailed protection for copyright.
Here, in the data structure, the pieces of audio data may be associated with pieces of access information used to access the associated pieces of audio data, and the pieces of access information may be not encrypted.

Herewith, among information associated with the audio data, access information requiring no copyright protection is not encrypted. Accordingly, necessary copyright protection can be provided without unwanted encryption and decryption processes.
Here, the content data may further include one or more play lists, each of which includes an order of playing back pieces of the audio data and an identification name of the play list. Here, only the identification name is encrypted.

Herewith, in the case when the playback order of the audio data is not subject to copyright protection, no encryption is performed, except for on identification names of the play lists. Accordingly, necessary copyright protection can be provided without unwanted encryption and decryption processes.
Furthermore, the memory card of the present invention stores therein content data used by a playback apparatus having a display.
Here, the content data has a data structure in which a plurality of pieces of audio data to be played back are associated with pieces of encrypted code information which are created by encrypting, by a predetermined encryption key, pieces of code information, each of which indicates text to be shown on the display at the time of playback of a corresponding piece of the audio data. The memory card comprises: a protected area accessible after authentication; and a non-protected area accessible without the authentication. Here, the predetermined encryption key is stored in the non-protected area.

According to the above-mentioned structure, the memory card of the present invention is capable of storing content data in which text information is encrypted. As a result, in the case when copyright works are included in the text information, protection can be provided for the copyright works.
Furthermore, the playback apparatus of the present invention has a display and plays content data back. Here, the content data has a data structure in which a plurality of pieces of audio data are associated with pieces of encrypted code information which are created by encrypting with a predetermined algorithm pieces of code information, each indicating text. The playback apparatus comprises: a playback unit operable to play back a piece of the audio data; a decryption unit operable to decrypt a piece of the encrypted code information to create a piece of the code information; and a display unit operable to show on the display, when the playback unit plays back a piece of the audio data, a piece of the code information created by the decryption unit by decrypting a piece of the encrypted code information associated with the piece of the audio data.

According to the above-mentioned structure, the playback apparatus of the present invention is capable of playing back content data in which text information is encrypted and displaying encrypted text information. As a result, it is possible to play back, together with the text information, the content data where the text information including copyright works is protected.

### Brief Description of the Drawings

FIG. 1 is a functional block diagram showing structures of a memory card 1000 and a recording/playback apparatus 2000;
FIG. 2 shows a conventional directory structure of content data with FIG. 2A showing an example of a directory structure of data stored in a user data area 1220 and FIG. 2B showing an example of a directory structure of data stored in a protected area 1210;
FIG. 3 shows an association between a protected area including AOBSA1.KEY, AUDIOPLM.KEY and AUDIOTKM.KEY and a user area including SD_AUDIO.PLM, SD_AUDIO.TKM and AOB files;
FIG. 4 shows a structure of navigation data;
FIG. 5 shows an interrelationship among DPLI, TKI and AOB files;
FIG. 6 shows an interrelationship among PLI, TKI and AOB files;
FIG. 7 is a flowchart showing a playback process of audio data stored in the memory card 1000;
FIG. 8 is a flowchart showing a recording process for recording audio data on the memory card 1000;
FIG. 9 shows an association of control information and the like with encryption keys according to Modification 1;
FIG. 10 shows an association of control information and the like with encryption keys according to Modification 2;
FIG. 11 shows an association of control information and the like with encryption keys according to Modification 3;
FIG. 12 shows an association of control information and the like with encryption keys according to Modification 4;
FIG. 13 shows an association of control information and the like with encryption keys according to Modification 5;
FIG. 14 shows an association of control information and the like with encryption keys according to Modification 6;
FIG. 15 shows an association of control information and the like with encryption keys according to Modification 7;
FIG. 16 shows an example of a part of control information which is encrypted, according to Modification 8;
FIG. 17 shows an example of a part of control information which is encrypted, according to Modification 9;
FIG. 18 shows a relationship between play lists and tracks of SD-Voice; and
FIG. 19 shows a directory structure of SD-Voice.

### Explanation of References

- 1000: memory card
- 1000: recording/playback apparatus
- 1100: control IC
- 1110: command decoding unit
- 1120: mutual authentication unit
- 1130: protected-area access control unit
- 1140: non-protected-area access control unit
- 1150: decryption circuit
- 1160: master-key storage unit
- 1200: flash memory
- 1210: protected area
- 1220: user data area
- 2000: recording/playback apparatus
- 2100: control unit
- 2200: mutual authentication unit
- 2300: recording unit
- 2400: encryption unit
- 2500: playback unit
- 2600: decryption unit
- 2700: device-key storage unit
- 2800: display

### Best Mode for Carrying Out the Invention

### EMBODIMENT 1

### <Overview>

Of content data related to the present invention, not AV data but text data is all to be encrypted.

The present invention aims at delivering complete protection of literary copyright works by encrypting text data possible to be a copyright work.

The following describes content data of the present invention.

### <Structure>

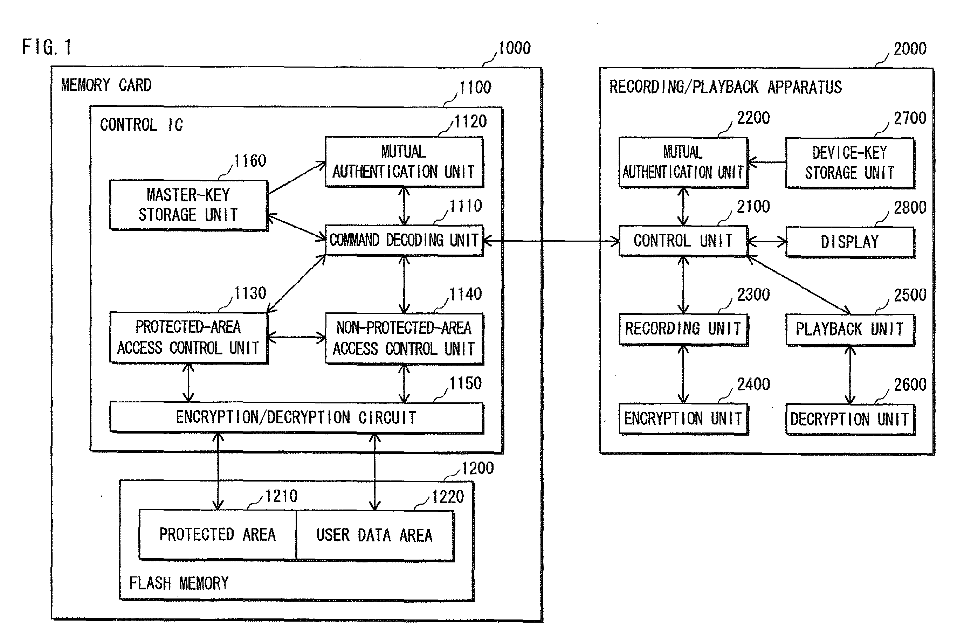

FIG. 1 is a functional block diagram showing structures of a memory card 1000 and a recording/playback apparatus 2000.

### <Structure of Memory Card>

First, a description is given of the memory card 1000.

The memory card 1000 has two IC chips built-in-a control IC 1100 and a flash memory 1200. Additionally, the memory card 1000 also has various pins (not shown in the figure) enabling data input/output with ROM storing therein media IDs and secured media IDs, and also with external devices.
The control IC 1100 is a control circuit comprising active elements (e.g. logic gates), and includes a command decoding unit 1110, a mutual authentication unit 1120, a protected-area access control unit 1130, a non-protected-area access control unit 1140, an encryption/decryption circuit 1150, and a mater-key storage unit 1160.

The flash memory 1200 comprises a protected area 1210 and a user data area 1220.
The mutual authentication unit 1120 of the control IC 1100 is a circuit enabling challenge-response mutual authentication with the recording/playback apparatus 2000 via a COMMAND pin of the memory card 1000. Challenge-response mutual authentication is a protocol in which two devices mutually perform an authentication step to verify each other's authenticity. The authentication step is a step taken by one device to determine whether to verify the other. In the step, one device (1^{st} device) sends challenge data to the other (2^{nd} device), which then performs a process on the challenge data to create response data to be authenticated in the 1^{st} device. After receiving the response data, the 1^{st} device compares the response data against the challenge data to thereby determine whether to verify the 2^{nd} device.

The command decoding unit 1110 is a controller comprising a control circuit and a decode circuit determining a type of command input to the memory card 1000 via the COMMAND pin and executing the command, and has a function of controlling each component according to the type of an input command. Such commands include commands for reading, writing and deleting data of the flash memory 1200, for example.

The master-key storage unit 1160 prestores a master key having been encrypted. The master key is an encryption key used for encrypting a media ID, and used for mutual authentication when the memory card 1000 is connected to a device.
The protected-area access control unit 1130 is a circuit for performing data writing and reading to/from the protected area 1210 of the flash memory 1200, while the non-protected-area access control unit 1140 is a circuit for performing data writing and reading to/from the user data area 1220, which is a non-protected area of the flash memory 1200. The protected-area access control unit 1130 and the non-protected-area access control unit 1140 respectively transmit and receive data to/from the recording playback apparatus 2000 via four data pins.

The encryption/decryption circuit 1150 is a circuit for, under the control of the protected-area access control unit 1130 and non-protected-area access control unit 1140, performing encryption and decryption using a master key stored in the master-key storage unit 1160. Also the encryption/decryption circuit 1150 encrypts data before writing the data to the flash memory 1200, and decrypts data read from the flash memory 1200.

### <Structure of Recording/Playback Apparatus>

Next, a description is given of the recording/playback apparatus 2000.
The recording/playback apparatus 2000 includes a control unit 2100, a mutual authentication unit 2200, a recording unit 2300, an encryption unit 2400, a playback unit 2500, a decryption unit 2600, a device-key storage unit 2700 and a display 2800.

The control unit 2100 has a function of controlling functions of the recording/playback apparatus 2000, such as recording, playback and encryption. Also the control unit 2100 has a function of controlling transmission and reception of various types of data with the memory card 1000 via pins.
The mutual authentication unit 2200 has a function of authenticating the authenticity of the memory card 1000. In doing so, the mutual authentication unit 2200 uses a device key stored in the device-key storage unit 2700.

The recording unit 2300 has a function of recording audio data, such as music, to the memory card 1000. In doing so, the recording unit 2300 requests the encryption unit 2400 having an encryption function to encrypt the audio data, and then transmits the encrypted audio data to the memory card 1000.
The playback unit 2500 has a function of playing back audio data read from the memory card 1000. In doing so, the playback unit 2500 requests the decryption unit 2600 having a decryption function to decrypt the audio data, and then plays back the decrypted audio data.

The display 2800 has a function of displaying text information-e.g. a title of the music currently being played back-at the request of the control unit 2100.
Next, a description is given of a structure of content data stored in the flash memory 1200.

### <Conventional Directory Structure of Content Data>

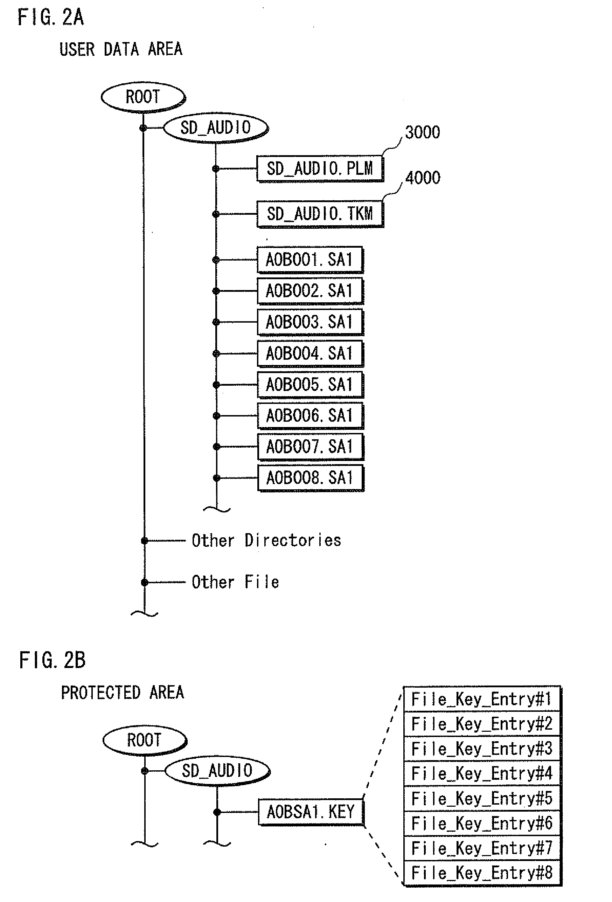

FIG. 2 shows a conventional directory structure of content data. FIG. 2A shows an example of a directory structure of data stored in the user data area 1220; FIG. 2B shows an example of a directory structure of data stored in the protected area 1210.

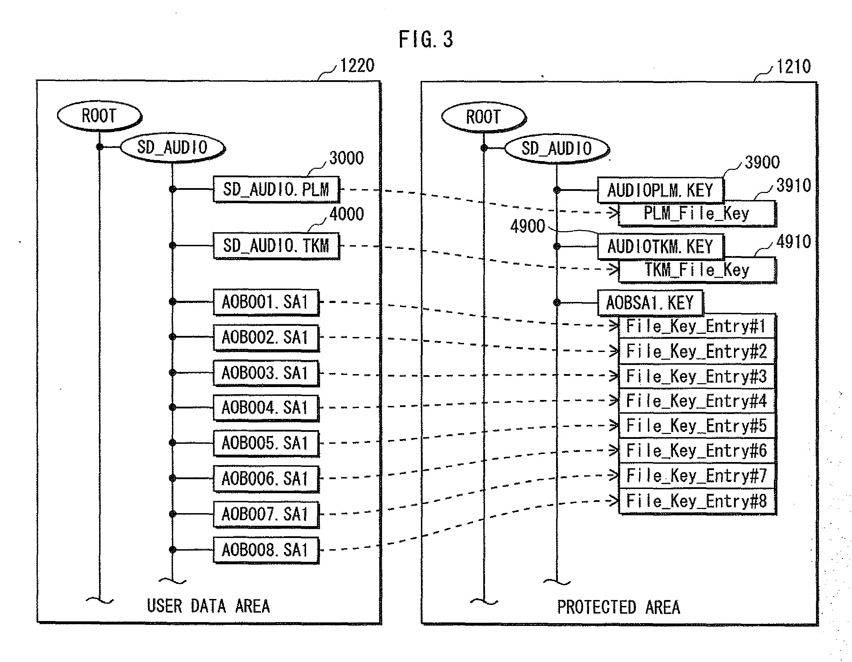

Although FIG. 2 shows the conventional directory structure of content data, the directory structure of the present embodiment is the same as the conventional one, except for two files added to the directory structure of data stored in the user data area 1220 of FIG. 2A. These added files are hereinafter explained in reference to FIG. 3.
'SD_AUDIO.PLM' 3000 and 'SD_AUDTO.TKM' 4000 in FIG. 2 are files including navigation data, which is control information such as PlaylistManager (PLMG) and TrackManager (TKMG). 'AOB001.SA1', 'AOB002.SA1', 'AOB003.SA1', 'AOB004.SA1'... are files storing therein audio data, which is presentation data. (These files are hereinafter referred to as 'AOB files'.)

An extension 'SA' in 'AOB0xx.SA1' is an abbreviation of 'Secure Audio', and indicates that the stored content requires copyright protection. (Note that, although FIG. 2A shows only eight AOB files, which is merely an example, and the SD_Audio directory is able to store up to 999 AOB files.)
Thus, in the case where presentation data requires copyright protection, a subdirectory called SD_Audio directory is created in the protected area, and an encryption-key storage file AOBSA1.KEY is created under the SD_Audio directory.

FIG. 2B shows an encryption-key storage file AOBSA1.KEY stored under SD_Audio. In the encryption-key storage file AOBSA1.KEY, 'File_Key_Entry#1-#8' which is an encryption key sequence where multiple encryption keys FileKey are put in a predetermined order.
In electronic music distribution, the server computer of a music company has two SD_Audio directories shown in FIGs. 2A and 2B. When a request for purchasing music content is received from a consumer, the server computer compresses and encrypts these SD_Audio directories, and then transmits, via a public network, the encrypted SD_Audio directories to the consumer having made the purchase request. When receiving the encrypted SD_Audio directories, a computer owned by the consumer decrypts and decompresses the directories to obtain the SD_Audio directories. (Note that the public network here can be any network available for the public-for example, a wire communication network such as an ISDN line, or a wireless communication network represented by mobile phones.)

Other than the above-mentioned method, in order to obtain the SD_Audio directories, AOB files may be downloaded from the server computer of the music company, and then the computer owned by the consumer may create on the memory card 1000 the SD_Audio directories shown in FIGs. 2A and 2B.

### <Two SD_Audio Directories of Present Invention and their Relationship>

Next, a description is given of a relationship of the files of these two SD_Audio directories.

FIG. 3 shows an association between the protected area 1210 including AOBSA1.KEY, AUDIOPLM.KEY 3900 and AUDIOTKM.KEY 4900 under the SD_Audio and the user data area 1220 including SD_AUDIO.PLM 3000, SD_AUDIO.TKM 4000 and AOB files. Note that AUDIOPLM.KEY 3900 and AUDIOTKM.KEY 4900 in the protected area 1210 are files added in the present embodiment.

In the figure, FileKeys having been used to perform encryption to create encrypted files in the user data area 1220 are stored in a corresponding encryption-key storage file 'AOBSA1.KEY' in the protect area 1210. Encrypted AOB files and encryption keys are associated with each other as shown by dotted arrows. The association is described herein later.
Conventionally, encryption keys are associated only with AOB files (see FIG. 2), and it is only AOB files that have been encrypted, while '3D_AUDIO.PLM' 3000 and 'SD_AUDIO.TKM' 4000 are not encrypted.

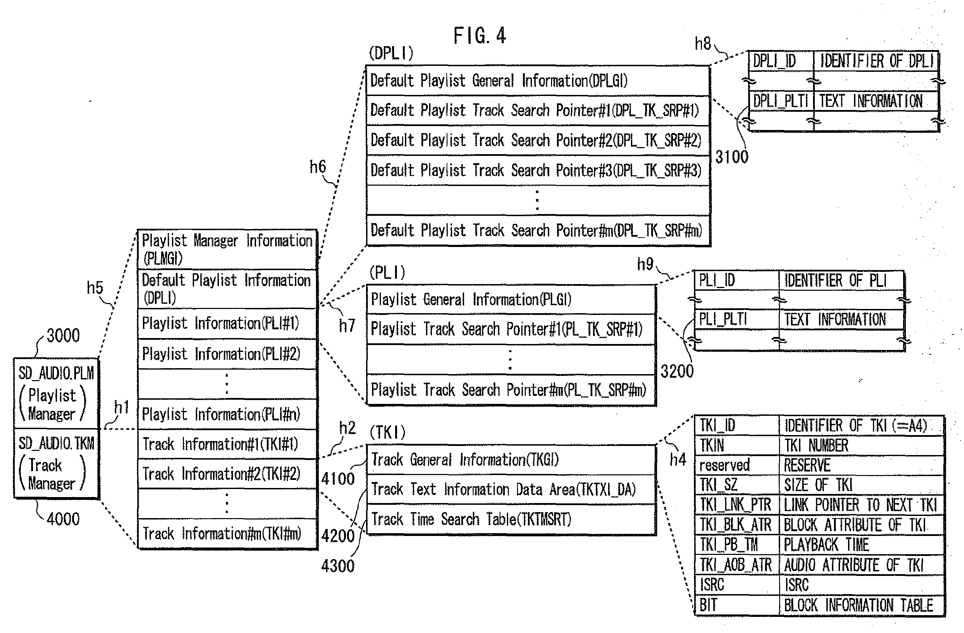

In the present embodiment, these two files are encrypted, and then an encryption key 'PLM_FILE_KEY' 3910 of 'SD_AUDIO.PLM' 3000 is stored in the file 'AUDIOPLM.KEY' 3900, and an encryption key 'TKM_FILE_KEY' 4910 of 'SD_AUDIO.TKM' 4000 is stored in the file 'AUDIOTKM.KEY' 4900.
The reason to encrypt these two sets of navigation data is because each of them includes text information. The existence of text information is described later with the aid of FIG. 4.

### <Associating AOB Files and Encryption Keys>

Encrypted AOB files and encryption-key storage files have an association relationship based on the following certain rules (1), (2) and (3).
(1) An encryption-key storage file is placed under a directory having the same name as a directory in which its corresponding encrypted file is stored. As can be seen in FIG. 3, the AOB files are placed under the SD_Audio directory in the user data area 1220, and the encryption-key storage file is also placed under the SD_Audio directory in the protected area 1210.

(2) As to an encryption-key storage file, a file name that is created by combining top three letters of the file name of its AOB file in the data area, the extension of the AOB file, and a predetermined extension '.key' is given to the encryption-key storage file. In the case when the file name of an AOB file is 'AOB001.SA1', the encryption-key storage file is given a file name 'AOBSA1.KEY', which is created by combining the top three letters 'AOB', 'SA1' and the extension '.key'.

(3) As to the file name of an AOB file, a number indicating where FileKey corresponding to the audio data is located in the encryption key sequence of the encryption-key storage file-i.e. a serial number indicating the order of the corresponding FileKey-is affixed. 'File Key Entry#1, #2, #3...#8' in the encryption-key storage file in FIG. 3 indicate the starting positions of the areas within the encryption-key storage file, where respective FileKeys are stored. As to the file names of the AOB files, on the other hand, serial numbers "001", "002", "003", "004" and the like are affixed. These serial numbers of the AOB files indicate where in the encryption key sequence the corresponding FileKeys are located, and therefore FileKey having used to encrypt each AOB file exists in 'File Key Entry' having the same serial number. The dotted arrows in FIG. 3 show the association relationship between the AOB files and FileKeys. That is, AOB001.SA1 in the user data area is associated with FileKey stored in 'File Key Entry#1'; AOB002.SA1, FileKey stored at or after 'FileKey Entry#2'; and AOB003.SA1, FileKey stored at or after 'FileKey Entry#3'.

As can also be seen from the above (3), FileKeys having used to encrypt AOB files are different for each file, and they are respectively stored in 'File Key Entry' having serial numbers the same as those incorporated in the file names, such as '001', '002', '003' and '004'. Since each AOB file is encrypted using a different FileKey, even if the encryption key of a particular AOB file is revealed to the public, other AOB files cannot be decrypted by using the revealed FileKey. Herewith, the damage in the case when FileKey used to encrypt an AOB file is revealed to the public can be kept to a minimum.

SD_AUDIO.PLM 3000, which is navigation data, is associated with the encryption key 'PLM_FILE_KEY' 3910 stored in 'AUDIOPLM.KEY' 3900, which is a file added in the present embodiment; SD_AUDIO.TKM 4000 is associated with the encryption key 'TKM_FILE_KEY' 4910 stored in 'AUDIOPLM.KEY' 4900.
Next, a description is given of navigation data, which is control information.

### <Structure of Navigation Data>

FIG. 4 shows a structure of navigation data.
The navigation data is made up of two files of 'SD_AUDIO.PLM' 3000 and 'SD_AUDIO.TKM' 4000 stored in the user data area 1220. The file 'SD_AUDIO.PLM' stores PlaylistManager (PLMG); the file 'SD_AUDIO.TKM' stores TrackManager (TKMG).

Multiple AOB files in the user data area 1220 include encoded AOBs, however, information on the playback time, the music title, and the composer for each AOB is not included. Furthermore, no information on the playback order of those AOBs is included. TrackManager (TKMG) and PlaylistManager (PLMG) are provided to inform such information to the playback apparatus.

Here, TrackManagere (TKMG) indicates an association relationship between tracks and AOBs included in AOB files. Each track here means a playback unit meaningful to the user, and for example, in the case music copyright works are to be stored in the memory card 1000, a track corresponds to a music piece.
Thus, TrackManager (TKMG) is provided to manage multiple AOBs included in multiple AOB files as a collection of tracks, and includes multiple pieces of track management information, which indicate various information of, for example, the playback time, music title and composer with respect to each of the AOBs.

PlaylistManager (PLMG) includes multiple play lists defining multiple playback orders of tracks.
First, a description is given of TrackManager (TKMG) with reference to a drawing.
FIG. 4 shows details of the structures of PlaylistManager 3000 and TrackManager 4000 in a stepwise fashion. In the figure, a logical format on the right-hand side shows further details of a logical format located to the immediate left-hand side, and a dotted lead line clearly specifies that the right-hand logic format is the details of which part of the left-hand logical format.

TrackManager 4000 includes, as shown by a dotted lead line h1, Track Information (abbreviated as TKI) #1, #2, #3, #4, ... and #n. These TKIs are information for managing, as tracks, AOBs included in AOB files, and correspond one-to-one to AOB files.
Each TKI includes, as shown by a dotted lead line h2: Track_General_Informatin (TKGI) 4100, which is general information; Track_Text_Infomation_Data_Area (TKTXTI_DA) 4200, in which text information unique to the TKI is written; and Track_Time_Serch_Table (TKTMSRT) 4300, which plays a role of a time search table.

The size of TKI is fixed (1024 bytes). TKGI and TKTXTI_DA are respectively 256-byte length, and a 512-byte fixed length in all. TKTMSRT is a 512-byte fixed length. In TrackManager, up to 999 TKIs can be set.
In TKGI 4100, a series of the following information is recorded, as shown by a lead line 4: 'TKI_ID', an identifier of TKI; 'TKIN', a TKI number; 'TKI_SZ', the size of TKI; 'TKI_LNK_PTR', a link pointer pointing to the next TKI; 'TKI_BLK_ATR', a block attribute; 'TKI_PB_TM', the playback time; 'TKI_AOB_ATR', an audio attribute of TKI; 'ISRC'; and 'BIT', block information. (Note that some fields are not shown in the figure for the sake of simplifying the description.)

For example, in 'TKI_ID', an ID that uniquely identifies TKI (in the present embodiment, a two-byte code of "A4") is written. In 'TKIN', a TKI number in the range of 1 and 999 is written. Note that the TKI number must not be the same as a TKI number written in TKIN of another TKI. TKIN indicates where in TrackManager the TKI is located, i.e. the position of TKI in terms of the sequential order in TrackManager. In the case of TKI#1 of the figure, the TKI number is written as "1"; TKI#2, "2"; and TKT#3, "3".

In 'TKI_SZ', the data size of TKI is expressed in byte units. Specifically speaking, it is written as 1024 bytes.
In Track Text Information Data Area (TKTXTI_DA) 4200, text information is written, indicating artist's name, album name, music arranger's name, producer's name and the like. Even if the text data does not exist, this area is reserved.

Track_Time_Serch_Table (TKTMSRT) 4300 is a time search table and manages a playback time and the like.
Next, a description is given of PlaylistManager 3000.
PlaylistManager 3000 includes, as shown by a dotted lead line h5: PlaylistManager_Information (PLMGI), which manages play lists stored in the memory card 1000; Default_Playlist_Information (DPLI), which manages all tracks stored in the memory card 1000; and PlaylistInformation(PLI)#1, #2, #3, #4, #5, ... and #n, which manage certain tracks.

Default_Playlist Information (PLMGI) includes, as shown by a dotted lead line h6, Default_Playlist_General_Information (DPLGI) and Default_Playlist_Track_Serch_Pointer (DPL_TK_SRP) #1, #2, #3, #4, ..., and #m.
DPLGI includes, as shown by a dotted lead line h8: 'DPLI_ID', which is an ID of DPLI; and 'DPLI_PLTI' 3100, which is Default Playlist text information.

Each PLI includes, as shown by a dotted lead line h7, Playlist_General_Information (PLGI) and Playlist_Track_Serch_Pointer (PL_TK_SRP) #1, #2, ..., and #m.
PLGI includes, as shown by a dotted lead line h9: 'PLI_ID', which is an ID of PLI; and 'PLI_PLTI' 3200, which is Playlist text information.
Here, the difference between DPLI and PLI is explained. DPLI is required to specify all tracks, while PLI does not have such a requirement and may specify arbitrary tracks. Therefore, PLI is suitable for a use where the user creates PLI, which only specifies user-defined tracks, and stores it on the memory card 1000. PLI is also suitable for a use where a playback apparatus automatically creates PLI, which specifies only tracks of a predetermined genre among multiple tacks stored in the memory card 1000, and stores it on the memory card 1000.

The maximum number of play lists are 99. Playlist Manager Information (PLMGI) and Default Playlist Information (DPLI) together have a fixed length of 2560 bytes. Playlist Information (PLI) has a fixed length of 512 bytes.
Here, there are three types of text data that the present embodiment aims to protect. That is, 'DPLI_PLTI' 3100 included in DPLI, 'PLI_PLTI' 3200 included in PLI, and 'TKTXI_DA' 4200 included in TKI.

### <Relationship between Navigation Data and AOB Files>

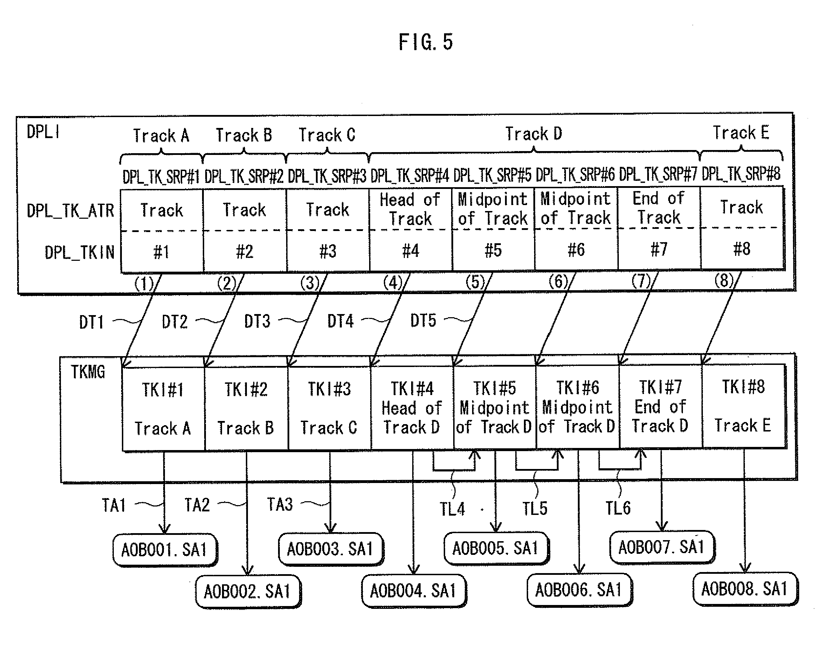

FIG. 5 shows an interrelationship among DPLI, TKI and AOB files.
In DPLI, eight pieces of DPL_TK_SRP are shown, and in TKMG, eight pieces of TKI are shown. Also eight AOB files are shown.
For each of DPL_TK_SRP#1-#8, DPL_TK_ATR, which indicates an attribute of the track, is shown on the upper side, and DPL_TKIN, which indicates a track number, is shown on the lower side.

With reference to arrows DT1, DT2, DT3, DT4, ... in the figure, it can be seen that DPL_TK_SRP#1 and TKI#1 have an association relationship. In the same manner, DPL_TK_SRP#2 and TKI#2, DPL_TK_SRP#3 and TKI#3, and DPL_TK_SRP#4 and TKI#4 respectively have an association relationship. Furthermore, with reference to DPL_TK_ATR of each DPL_TK_SRP, all DPL_TK_SRP#1, DPL_TK_SRP#2, DPL_TK_SRP#3 and DPL_TK_SRP#8 are associated with Tracks. That is, each of the four sets of DPL_TK_SRP#1→TKI#1(AOB001.SA1), DPL_TK_SRP#2→TKI#2(AOB002.SA1), DPL_TK_SRP#3→TKI#3(AOB003.SA1), and DPL_TK_SRP#8→TKI#8(AOB008.SA1) corresponds to an individual track.

It can be seen that any DPL_TK_ATR of DPL_TK_SRP#4, DPL_TK_SRP#5, DPL_TK_SRP#6 and DPL_TK_SRP#7 is not set as Track. DPL_TK_ATR of DPL_TK_SRP#4 is set as 'Head_of_Track'; DPL_TK_ATR of DPL_TK_SRP#7, 'End_of_Track'; and each DPL_TK_ATR of DPL_TK_SRP#5 and DPL_TK_SRP#6, 'Midpoint_of_Track'. This means that TKI#4 (AOB004.SA1) having an association relationship with DPL_TK_SRP#4 is a head of the track; TKI#5(AOB005.SA1) and TKI#6(AOB006.SA1) having association relationships with DPL_TK_SRP#5 and #6, respectively, are midpoints of the tracks; and TKI#7(AOB007.SA1) having an association relationship with DPL_TK_SRP#7 is an end of the track.

The order of DPL_TK_SRP in DefaultPlaylist indicates in what order AOBs associated with respective TKIs are to be played back. DPL_TKIN of each DPL_TK_SRP#1, #2, #3, #4, ..., and #8 in DefaultPlaylist of the figure indicates the respective TKI#1, #2, #3, #4, ... and #8. Accordingly, as shown by arrows (1), (2), (3), (4), ..., and (8), AOB001.SA1 associated with TKI#1 is played back first; AOB002.SA1 associated with TKI#2, second; ADB003.SA1 associated with TKI#3, third; and AOB004.SA1 associated with TKI#4, forth. Note that the association between TKI#1 and AOB001.SA1 is indicated by an arrow TA1. An arrow TL4 indicates that TKI#4 and TKI#5 are continuous.

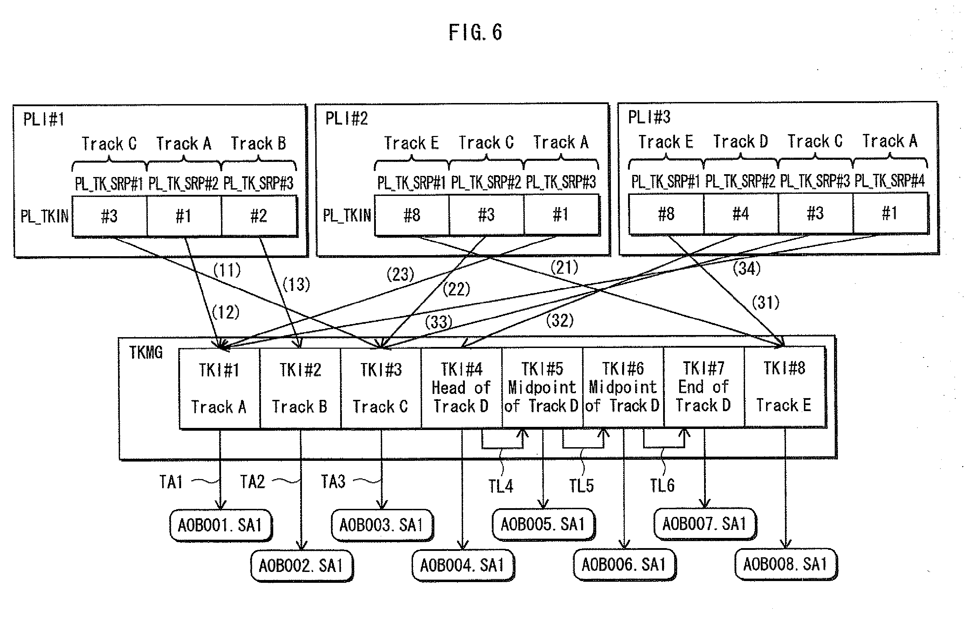

FIG. 6 shows an interrelationship among PLI, TKI and AOB files.
Playlist#1 is made up of PL_TK_SRP#1, #2 and #3, among of which PL_TKIN of PL_TK_SRP#1 is written as #3; PL_TKIN of PL_TK_SRP#2, #1; and PL_TKIN of PL_TK_SRP#3, #2. Accordingly, in the case when tracks are played back using PlayList information #1, multiple AOBs are played back in the order of AOB#3, #1 and #2, as shown by arrows (11), (12) and (13).

Playlist#2 is made up of PL_TK_SRP#1, #2 and #3, among of which PL_TKIN of PL_TK_SRP#1 is written as #8; and PL_TKIN of PL_TK_SRP#2 and #3, #3 and #1. Accordingly, in the case when tracks are played back using PlayList information #2, multiple AOBs are played back, as shown by arrows (21), (22) and (23), in the order of AOB#8, #3 and #1, which is a completely different order from that of Playlist#1.
Thus, in PlayListManager, DefaultPlaylist and multiple pieces of PlayList information are written. If different playback orders are written in DPL_TKIN of DPL_TK_SRP and PL_TKIN of PL_TK_SRP making up of DefaultPlaylist and PlayList information, respectively, multiple AOBs are to be played back in different orders. Thus, multiple AOBs are played back in completely different orders, which allows the user to use the memory card 1000 with a sense as if multiple music albums had been stored in the memory card 1000.

### <Operation>

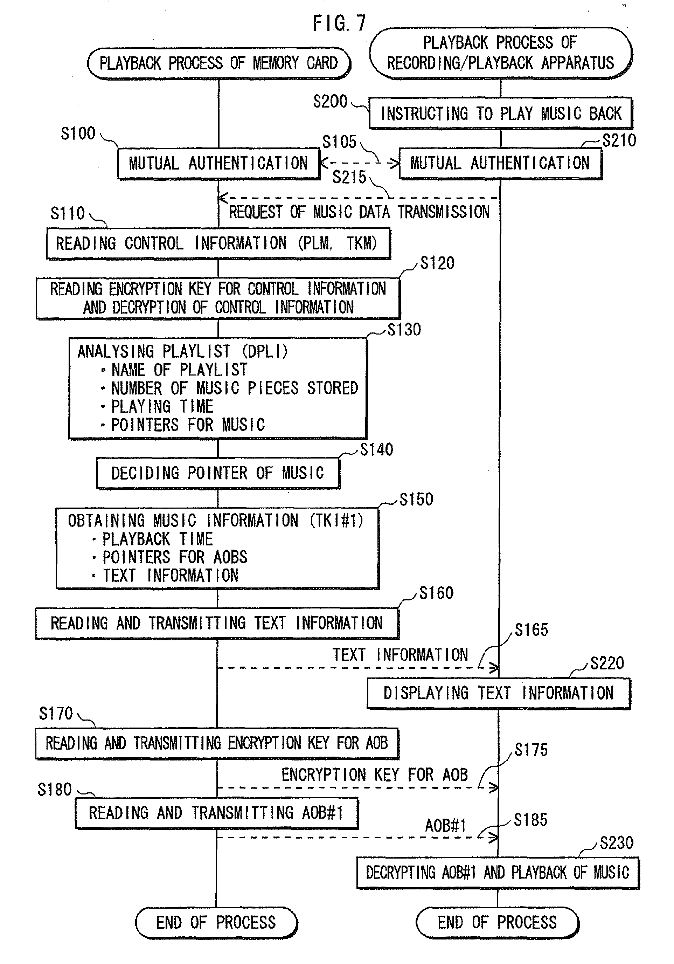

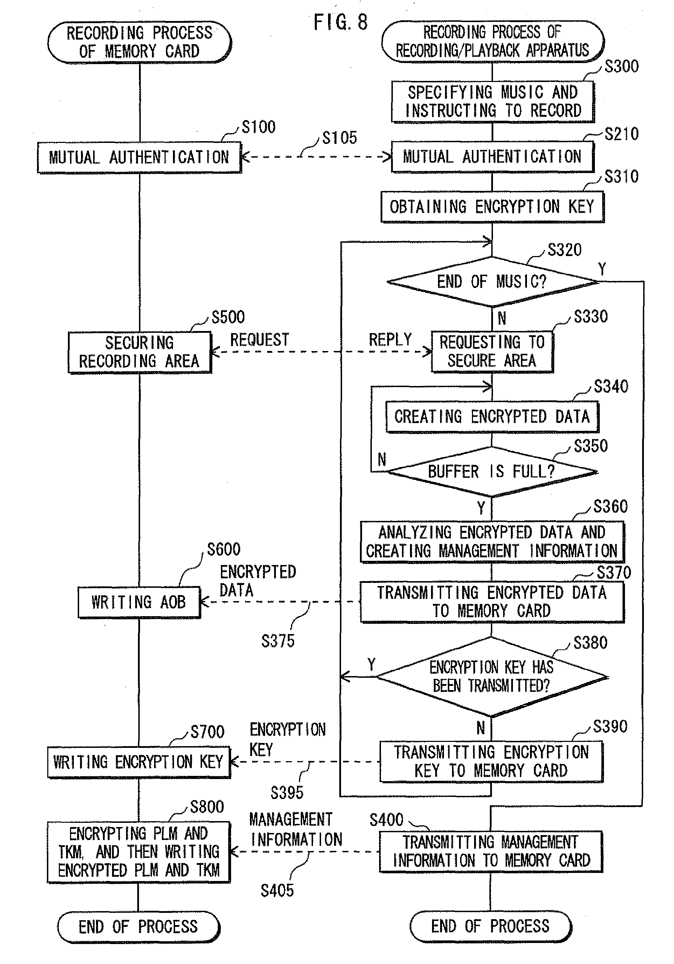

The following describes operation of the memory card 1000, which stores therein the above-mentioned content data, and the recording/playback apparatus with the aid of FIGs. 7 and 8.
FIG. 7 is a flowchart showing a playback process of audio data stored in the memory card 1000.

First, the user sets the memory card 1000 onto the recording/playback apparatus 2000, and gives an instruction of playing music back (Step S200). The present embodiment shows an example where the first music piece is played back in a default play list.
Detecting the playback instruction, the control unit 2100 performs a mutual authentication with the memory card 1000 (Step S210 and Step S100).

A brief description is given of a procedure of the mutual authentication.
The control unit 2100 of the recording/playback apparatus 1000 transmits to the memory card 1000 a command requesting transmission of a master key and a media ID unique to the memory card.
The memory card 1000 has the command decoding unit 1110 decoding the transmitted command, and transmits an encrypted master key and its media ID via the mutual authentication unit 1120.

The mutual authentication unit 2200 of the recording/playback apparatus 2000 decrypts the received encrypted master key using a device key of the device-key storage unit 2700 to create a master key, which is then used to encrypt the media ID to thereby create a secured media ID.
When the created secured media ID is the same as a secured media ID held by the memory card 1000, the mutual authentication is successful (Step S105).

If the mutual authentication is not properly performed by the mutual authentication unit 1120 of the memory card 1000 and the mutual authentication unit 2200 of the recording/playback apparatus 2000, the subsequent process is not carried out.
After the mutual authentication is successfully performed, a command requesting transmission of audio data is transmitted from the recording/playback apparatus 2000 (Step S215).
The command decoding unit 1110 decodes the received command and performs a process of reading the audio data.

First, the command decoding unit 1110 requests the non-protected-area access control unit 1140 to read SD_AUDIO.PLM and SD_AUDIO.TKM, which are control information (Step S110).
Since the control information is encrypted, the command decoding unit 1110 requests the protected-area access control unit to read corresponding encryption keys-an encryption key of AUDIOPLM.KEY file 'PLM_File_key' and an encryption key of AUDIOTKM.KEY file 'TKM_File_key'.

Using the read encryption keys, the command decoding unit 1110 decrypts SD_AUDIO.PLM and SD_AUDIO.TKM (Step S120). Especially speaking, the decryption is realized by setting the encryption keys in the encryption/decryption circuit 1150.
Here, the present embodiment shows an example where the first piece of music is played back in a default play list. In the case of playing back another play list or another piece of music, however, the command decoding unit 1110 retrieves and transmits necessary text information to the recording/playback apparatus 2000, and causes the display 2800 to show the text information. Then, the command decoding unit 1110 carries out a process for specifying a play list or music by, for example, letting the user give an indication on the display 2800.

Next, the command decoding unit 1110 analyzes SD_AUDIO.PLM, and obtains information of the play list. Here, the information obtained includes text information, which is the name of the play list of DPLI_PLTI, the number of music pieces stored, the playing time, and pointers for music (Step S130, see FIG. 4).
Subsequently, the command decoding unit 1110 decides a pointer DPL_TK_SRP#1 of music to be played back (Step S140, see FIG. 5). The command decoding unit 1110 obtains TKI#1, which is information of the track, from DPL_TK_SRP#1, and reads the playback time, pointers for AOBs, and text information which is titles of music pieces (Step S150).

Among the read information, the command decoding unit 1110 reads necessary text information, such as the names of play lists and titles of music pieces, and transmits the text information to the recording/playback apparatus 2000 (Steps S160 and S165).
After the recording/playback apparatus 2000 receives the text information, the control unit 2100 of the recording/playback apparatus 2000 presents the text information on the display 2800 (Step S220).
After transmitting the text information, the command decoding unit 1110 then requests the protected-area access control unit 1130 to obtain an encryption key corresponding to AOB001.SA1, which is an AOB of DPL_TK_SRP#1. Receiving the request, the protected-area access control unit 1130 reads File_Key_Entry#1 of AOBSA1.KEY file (see FIG. 3).

The read encryption key File_Key_Entry#1 is transmitted to the recording/playback apparatus 2000 (Step S170 and Step S175).
Then, the command decoding unit 1110 reads and transmits AOB001.SA1 to the recording/playback apparatus 2000 (Step S180 and Step S185).
Receiving the encryption key File_Key_Entry#1 and audio data AOB001.SA1, the recording/playback apparatus 2000 causes the playback unit 2500 to perform playback as causing the decryption unit 2600 to decrypt the received audio data (Step S230).

Next, a description is given of the recording process.
FIG. 8 is a flowchart showing a recording process for recording audio data on the memory card 1000.
First, the user sets the memory card 1000 onto the recording/playback apparatus 2000, and gives an instruction of recording music (Step S300).

Detecting the recording instruction, the control unit 2100 performs a mutual authentication with the memory card 1000 (Step S210, Step S100 and Step S105). This mutual authentication is the same as one carried out in the playback process (see the description of FIG. 7).
After the mutual authentication is successfully performed, the control unit 2100 obtains an encryption key (Step S310). Here, assume that the encryption key has been determined by a manufacturer of a memory card on which music is recorded, or by an individual who uses the memory card, i.e. a user, and has been stored in a storage unit (not shown) of the recording/playback apparatus 2000.

Next, the control unit 2100 requests the recording unit 2300 to record music. Receiving the request, the recording unit 2300 performs the following process until the end of the music-i.e. until all the audio data is encrypted (Step S320).
From the control unit 2100, a command requesting to secure a recording area is transmitted (Step S330 and Step S335).

Receiving the command, the command decoding unit 1110 analyzes the received command, secures a recording area, and notifies the recording/playback apparatus 2000 that the recording area has been secured (Step S500 and Step S335).
Receiving the notification that the recording area has been secured, the recording unit 2300 starts encryption of the audio data. The recording unit 2300 sends the audio data and the obtained encryption key to the encryption unit 2400 and requests the encryption unit 2400 to encrypt the audio data.

The encryption unit 2400 performs encryption until a buffer, which is a working memory, becomes full (Step S340, and Step S350: N). When the buffer becomes full (Step S350: Y), the encryption unit 2400 analyzes data and creates management information (Step S360). For example, the encryption unit 2400 creates TKTMSRT, which has a role of a time search table of up to this point (see FIG. 4). In addition, the encryption unit 2400 creates necessary text information TKTXI_DA, such as titles and liner notes.

Creating the management information, the encryption unit 2400 transmits the encrypted audio data to the memory card 1000 (Step S370 and Step S375).
Receiving the encrypted audio data, the memory card 1000 requests the non-protected-area access control unit 1140 to write the received encrypted audio data as AOB files in the user data area 1220 (Step S600).

After transmitting the encrypted audio data to the memory card, if the recording/playback apparatus 2000 has not transmitted an encryption key (Step S380: N), the recording/playback apparatus 2000 transmits an encryption key used to encrypt the audio data to the memory card 1000 (Step S390 and Step S395).
Receiving the encryption key, the memory card 1000 requests the protected-area access control unit 1130 to write the encryption key in AOBSA1.KEY file in such a manner as to be associated with the audio data (Step S700).

Subsequently, the above-mentioned process (Steps S330-S370) is performed until all the audio data is encrypted and written to the memory card.
When all the audio data is encrypted and written to the memory card (Step S320: Y), the recording/playback apparatus 2000 puts together and transmits management information to the memory card (Step S400 and Step S405).

Receiving the management information, the memory card adds necessary information to each SD_AUDIO.PLM and SD_AUDIO.TKM, and then requests the non-protected-area access control unit 1140 to encrypt SD_AUDIO.PLM and SD_AUDIO.TKM respectively by AUDIOPLM.KEY file's encryption key 'PLM_File_key' and AUDIOTKM.KEY file's encryption key 'TKM_File_key' and subsequently write the encrypted SD_AUDIO.PLM and SD_AUDIO.TKM in the user data area 1220 (Step S800).

### <Modification 1>

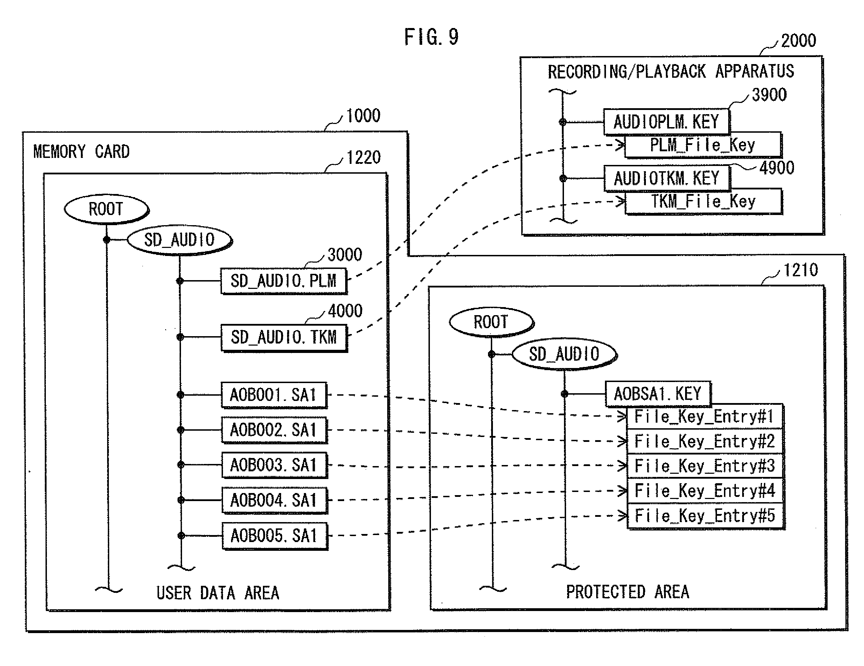

FIG. 9 shows an association of control information and the like with encryption keys according to Modification 1.

In the embodiment above, the unit of encryption is a file, and the files SD_AUDIO.PLM 3000 and SD_AUDIO.TKM 4000 are encrypted. As to their encryption keys, the files AUDIOPLM.KEY 3900 and AUDIOTKM.KEY 4900 are provided in the protected area 1210, and the respective keys are stored in the files AUDIOPLM.KEY 3900 and AUDIOTKM.KEY 4900.
The present modification differs from the above embodiment in that, although files that are encrypted are the same, the encryption keys are not stored in the protected area 1210 of the memory card 1000, but held by the recording/playback apparatus 2000.

The recording/playback apparatus 2000 may prestore encryption keys, or may download them externally via the Internet or the like.
In this way, safer environments can be provided as compared to the case where the encryption keys are stored in the memory card, since the encryption keys exist outside the memory card.
In addition, the safety can be further enhanced by providing a different encryption key for each memory card. For example, on the record/playing apparatus 2000, encryption keys may have been stored in association with ID numbers each unique to a memory card. Then, at the time of playback, an ID number is read from the memory card, and an encryption key associated with the read ID number is selected.

### <Modification 2>

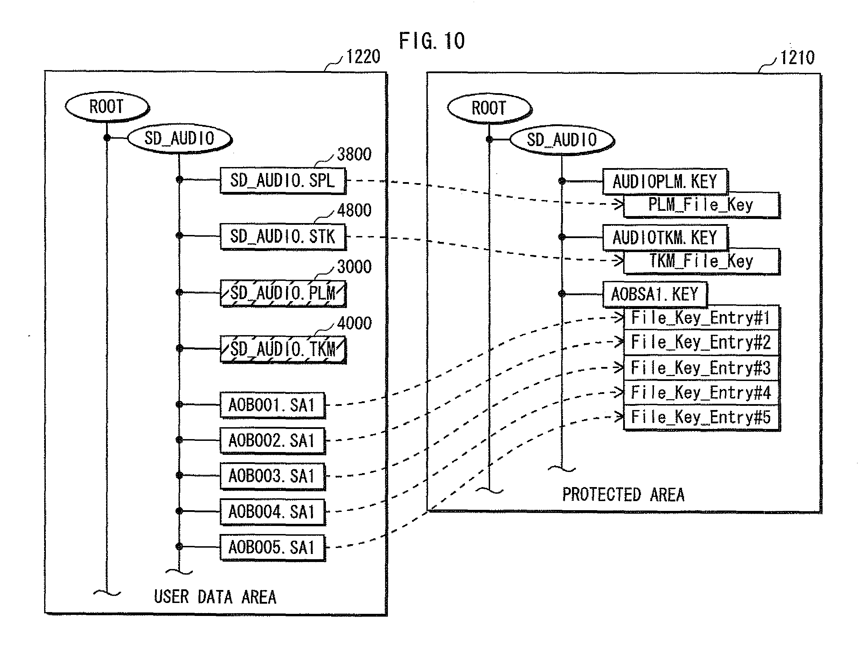

FIG. 10 shows an association of control information and the like with encryption keys according to Modification 2.
In the embodiment above, the unit of encryption is a file, and the files SD_AUDIO.PLM 3000 and SD_AUDIO.TKM 4000 are encrypted. As to their encryption keys, the files AUDIOPLM.KEY 3900 and AUDIOTKM.KEY 4900 are provided in the protected area 1210, and the respective keys are stored in the files AUDIOPLM.KEY 3900 and AUDIOTKM.KEY 4900.

The present modification differs from the above embodiment in not encrypting SD_AUDIO.PLM 3000 and SD_AUDIO.TKM 4000 but encrypting SD_AUDIO.SPL 3800 and SD_AUDIO.STK 4800.
By storing text information to be protected in these added files SD_AUDIO.SPL 3800 and SD_AUDIO.STK 4800, it is possible to retain compatibility with conventional memory cards while realizing copyright protection.

That is, since SD_AUDIO.PLM 3000 and SD_AUDIO.TKM 4000 are not encrypted, there is an advantageous effect that a conventional recording/playback apparatus can record and play back these files.
Furthermore, like SD_AUDIO.PLM 3000 and SD_AUDIO.SPL 3800, it can be determined by the extensions whether encryption has been performed. In this case, for Playlist Manager, it is sufficient if either one of the files exists. That is, when information to be protected is included, the name of SD_AUDIO.SPL is assigned; when information need not to be protected, the name of SD_AUDIO.PLM is given, and thus there is an advantageous effect that unnecessary processes of encryption and decryption can be avoided.

It is a matter of course that the method of determining whether to encrypt by an extension can be applied to other modifications.

### <Modification 3>

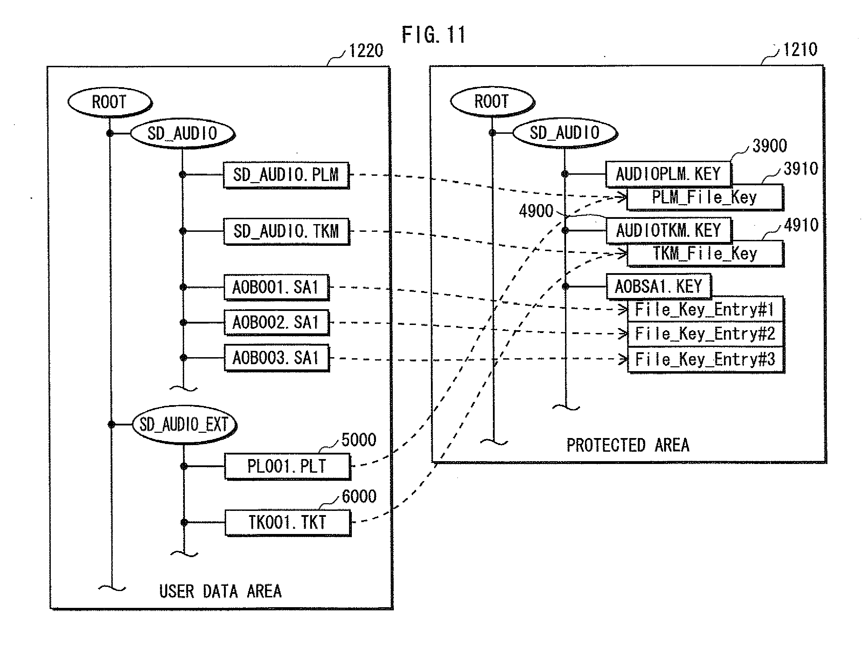

FIG. 11 shows an association of control information and the like with encryption keys according to Modification 3.
In the embodiment above, the unit of encryption is a file, and the files SD_AUDIO.PLM 3000 and SD_AUDIO.TKM 4000 are encrypted. As to their encryption keys, the files AUDIOPLM.KEY 3900 and AUDIOTKM.KEY 4900 are provided in the protected area 1210, and the respective keys are stored in the files AUDIOPLM.KEY 3900 and AUDIOTKM.KEY 4900.

In the present modification, a directory SD_AUDIO_EXT, which is extended data, and files PL001.PLT 5000 and TK001.TKT 6000 are added to the file structure of the above embodiment. The PL001.PLT and TK001.TKT are extended data of AOB001.SA1, and do not have to exist in all AOB files.
In these files, text information that cannot fit in the files SD_AUDIO.PLM3000 and SD_AUDIO.TKM4000 and pertains to AOB001.SA1 is included. The text information is lyrics and comments of artists, for example.

The present modification encrypts also this text information.
Here, a file with an extension of PLT is encrypted by PLM_File_Key 3910 of AUDIOPLM.KEY 3900, and a file with an extension of TKT is encrypted by TKM_File_Key 4910 of AUDIOTKM.KEY 4900.
Thus, by sharing the encryption keys, there are advantageous effects that there is no need to secure a new area for encryption keys and that extended data existing only in some of AOB files can also be protected.

In the case when extended data exists as in the present modification, it may be designed to allow the user to chose whether the extended data is displayed. This is because the extended data exists in no association with AOB files, which are files of audio data, and may be information not directly relevant to the audio data.
For example, the presence of extended data can be shown on the display of the recording/playback apparatus, and then the extended data is decrypted and displayed only when, via switches or buttons of the recording/playback apparatus, the user gives an instruction to display the extended data.

### <Modification 4>

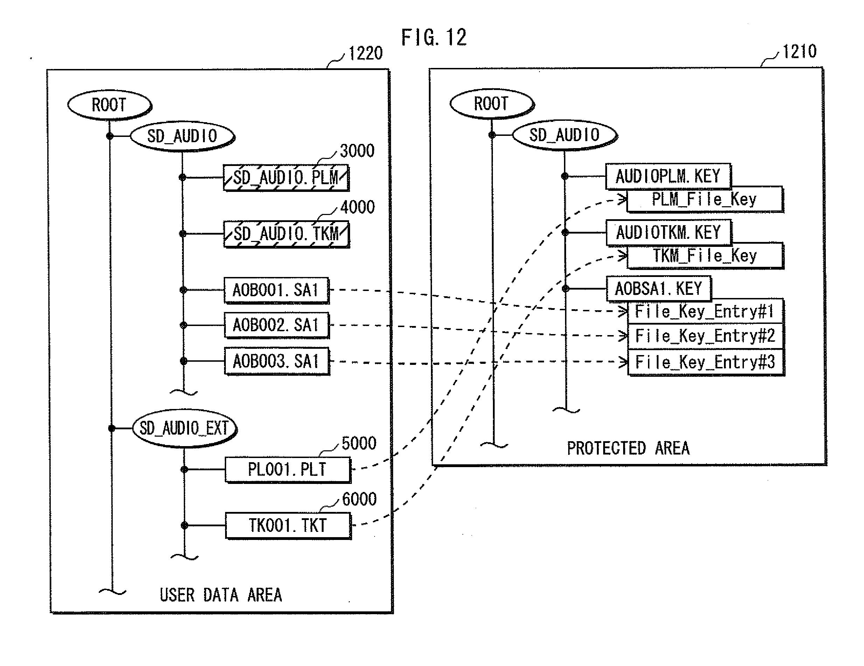

FIG. 12 shows an association of control information and the like with encryption keys according to Modification 4.
In the embodiment above, the unit of encryption is a file, and the files SD_AUDIO.PLM 3000 and SD_AUDIO.TKM 4000 are encrypted. As to their encryption keys, the files AUDIOPLM.KEY 3900 and AUDIOTKM.KEY 4900 are provided in the protected area 1210, and the respective keys are stored in the files AUDIOPLM.KEY 3900 and AUDIOTKM.KEY 4900.

In the present modification, SD_AUDIO.PLM 3000 and SD_AUDIO.TKM 4000 are not encrypted as in the conventional case, and instead, files PL001.PLT 5000 and TK001.TKT 6000 that are extended data are encrypted.
By encrypting only the extended data, there are advantageous effects that compatibility with conventional memory cards can be retained and that a large amount of text information can be protected.

### <Modification 5>

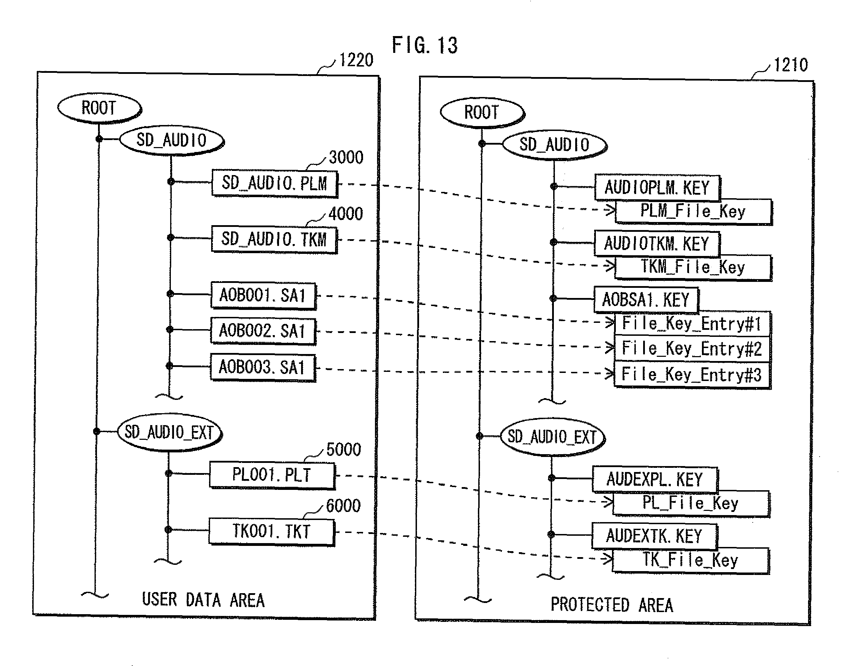

FIG. 13 shows an association of control information and the like with encryption keys according to Modification 5.
In the embodiment above, the unit of encryption is a file, and the files SD_AUDIO.PLM 3000 and SD_AUDIO.TKM 4000 are encrypted. As to their encryption keys, the files AUDIOPLM.KEY 3900 and AUDIOTKM.KEY 4900 are provided in the protected area 1210, and the respective keys are stored in the files AUDIOPLM.KEY 3900 and AUDIOTKM.KEY 4900.

The present modification includes a directory SD_AUDIO_EXT, which is extended data, and the files PL001.PLT 5000 and TK001.TKT 6000 in the file structure of the above embodiment.
The present modification is the same as Modifications 3 and 4 in that the extension files are protected by encryption; however, the present modification is different in having encryption keys for extension files.
In the present modification, a different encryption key is provided according to each extension. PLxxx.PLT is encrypted by PL_File_Key, and TKxxx.TKT is encrypted by TK_File_Key.

By providing encryption keys specific to extension files, there are advantageous effects that the protection becomes further robust and that, at the same time, flexibility of being able to encrypt extension files of AOB files can be obtained.
Alternatively, an encryption key may be created for each extension file.

### <Modification 6>

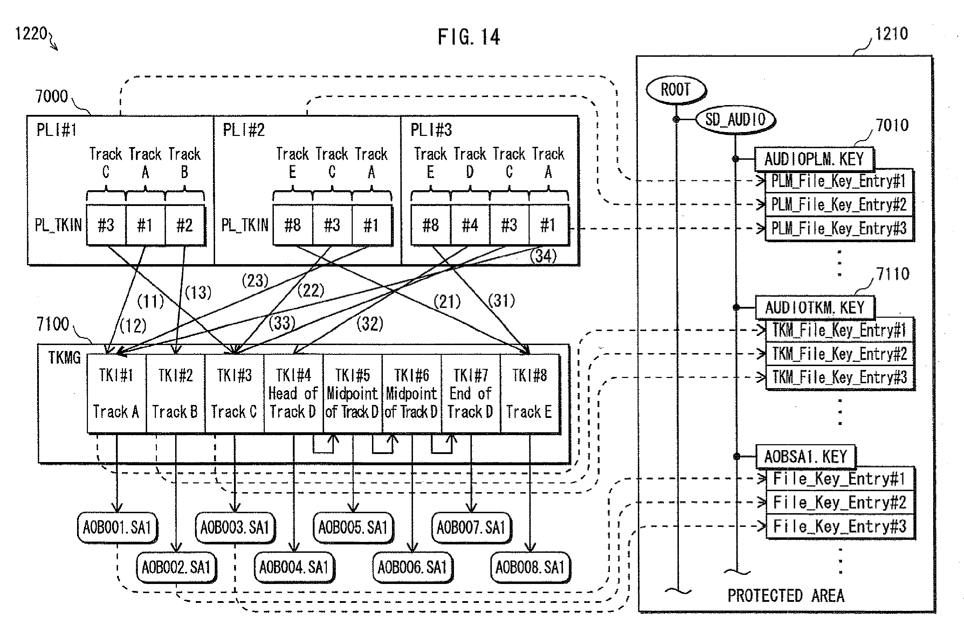

FIG. 14 shows an association of control information and the like with encryption keys according to Modification 6.

In the embodiment above, the unit of encryption is a file, and the files SD_AUDIO.PLM 3000 and SD_AUDIO.TKM 4000 are encrypted. As to their encryption keys, the files AUDIOPLM.KEY 3900 and AUDIOTKM.KEY 4900 are provided in the protected area 1210, and the respective encryption keys are stored in the files AUDIOPLM.KEY 3900 and AUDIOTKM.KEY 4900.
According to the present modification, the unit of encryption is not a file, but a part of a file.

In this example, encryption is performed with respect to each piece of play list information PLI, each piece of track information TKI, and each AOB file. By providing an encryption key unique to each, even if one of the encryption keys is revealed to the public, only a corresponding piece of information would be revealed, thus minimizing the damage. There is also an advantageous effect that, by encrypting pieces of play list information PLI and pieces of track information TKI for each AOB file, editing operations-such as replacement of content-can be easily carried out.

In addition, general and overall information such as PLGI-e.g. the number of music pieces stored, playback time-may not be encrypted. By not performing encryption on part requiring no protection, the modification has advantageous effects that the recording/playback process requires less time and that the volume of data is reduced.
At the playback time, information of content being stored may be shown on the display, and the user may obtain only an encryption key for content that the user desires to play back. Since unnecessary encryption keys are not recorded, the present modification has advantageous effects that the volume of data is reduced and content protection can also be secured.

### <Modification 7>

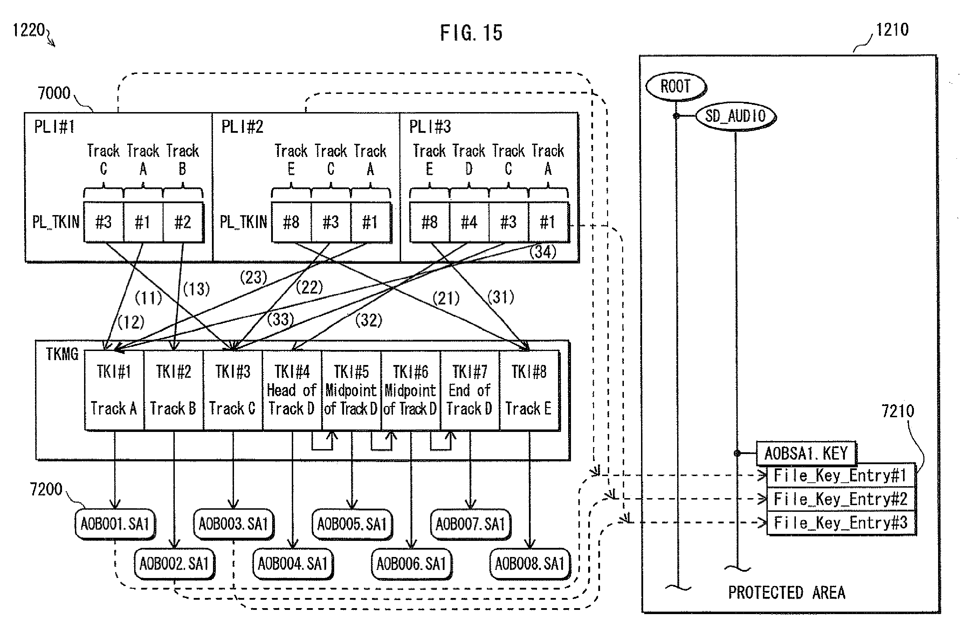

FIG. 15 shows an association of control information and the like with encryption keys according to Modification 7.
In Modification 6, a unique encryption key is provided for each piece of play list information PLI, each piece of track information TKI, and each AOB file. Contrary, in the present modification, common encryption keys are used for them.

For example, the same encryption key File_Key_Entry#1 7210 is used to encrypt AOB001.SA1 7200 and PLI#1 7000.
Here, a common encryption key is used for PLI#1 and AOB001.SA1, and similarly, a common encryption key is used for PLI#2 and AOB002.SA1; however, such combinations can be randomly made. Furthermore, it is a matter of course that TKI#1 and the like can be also encrypted. When combinations are randomly made, it is necessary to have information that specifies the encryption keys.

In this case, there are advantageous effects that encryption can be performed in small units, such as PLI#1, to protect necessary areas, and that areas for storing encryption keys can be reduced.
In addition, by encrypting an AOB file as well as play list information PLI and track information TKI relating to the AOB file with the use of the same encryption key, steps of obtaining encryption keys can be reduced to thereby simplify the playback process. Furthermore, using the same encryption key for PLT, TKI and AOB files that make up of the same track yields a similar advantageous effect.

### <Modification 8>

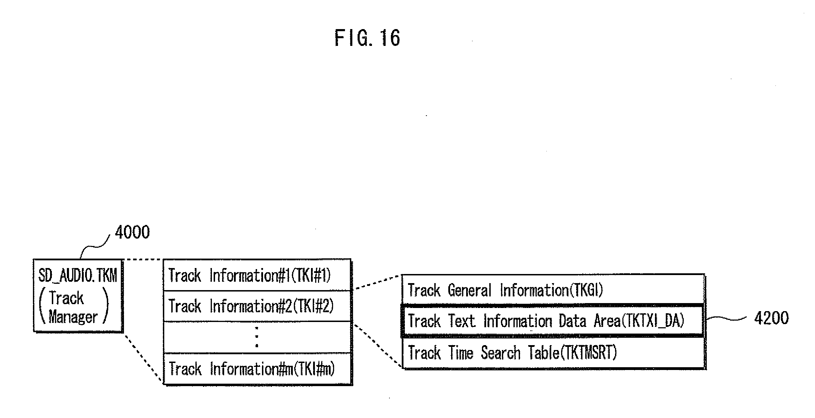

FIG. 16 shows an example of a part of control information which is encrypted according to Modification 8.
In the embodiment above, the unit of encryption is a file, and the files SD_AUDIO.PLM 3000 and SD_AUDIO.TKM 4000 are encrypted.
In the present modification, encryption is performed only on minimum necessary area.

In the example, within SD_AUDIO.TKM 4000, only TKTXI_DA 4200 including text information is encrypted. It is a matter of course that DOLI_PLTI or PLI_PLTI of SD_AUDIO.PLM 3000 may be encrypted (see FIG. 4).
By limiting encryption area, the present modification has advantageous effects that the time for encryption and decryption can be shortened while protection is provided for protection-requiring information, and time for decryption can be saved in the case when the encrypted part of information is not required.

### <Modification 9>

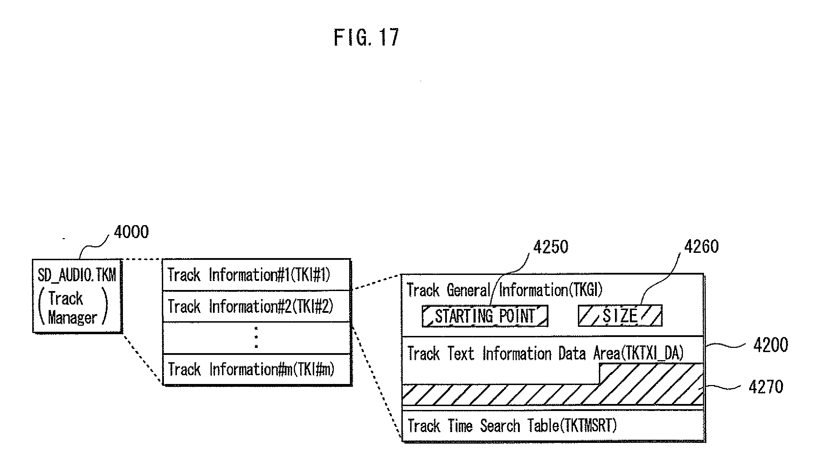

FIG. 17 shows an example of a part of control information which is encrypted according to Modification 9.
In Modification 8, within SD_AUDTO.TKM 4000, for example, only TKTXI_DA 4200 including text information is encrypted.
In the present modification, even smaller area is a target for encryption.

In the example, a shaded part 4270 of TKTXI_DA 4200 is encrypted.
TKGI includes a starting point 4250 and size 4260 of the encrypted area.
Herewith, it is possible to freely and flexibly encrypt only necessary part of the text information.
Note that encryption may be performed on multiple parts, or on other text information.

### <Additional Particulars>

The content data of the present invention has been described based on the above embodiment. The content data may, however, be partially modified, and thus it is a matter of course that the present invention is not limited to the embodiment. That is,
(1) in the embodiment and modifications above, the descriptions are given based on the SD-Audio standard; however, surely other standards may be adopted.

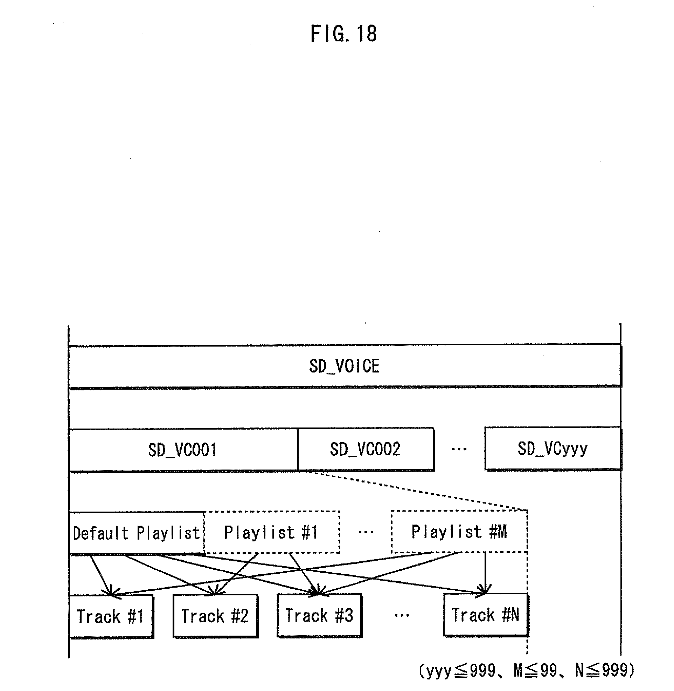

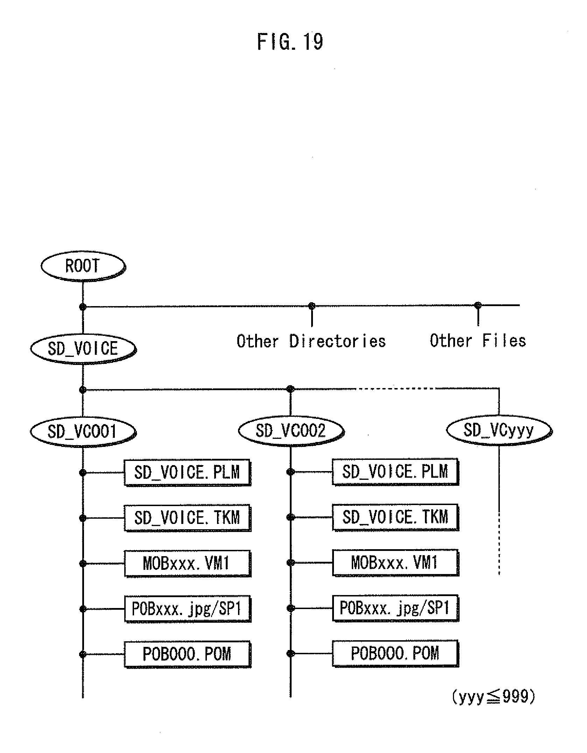

The SD-Voice standard is an example of such. A brief description is given with the aid of FIGs. 18 and 19.
FIG. 18 shows a relationship between play lists and tracks of SD-Voice.
Playlist indicates a playback order of music pieces under a directory SD-VCxxx, and is the same as a play list of SD-Audio. In addition, Track#1 and the like correspond to TKI#1 and the like of SD-Audio (see FIGs. 5 and 6).

FIG. 19 shows a directory structure of SD-Voice.
SD-VC001 directory and the like correspond to SD-AUDIO of SD-Audio; similarly SD_VOICE.PLM, SD_AUDIO.PLM; SD_VOICE.TKM, SD_AUDIO.TKM; and MOBxxx.VM1, AOBxxx.SA1 of SD-Audio.
Thus, since the data structure of SD-Voice has the same basic structure as that of SD-Audio, the present invention can be applied to SD-Voice and useful for copyright protection.
(2) In the embodiment, decryption and encryption of SD_AUDIO.PLM and SD_AUDIO.TKM are performed in the memory card; however, it may be performed in the recording/playback apparatus.

For example, when the volume of an encryption target is large, the process speed can be improved if the encryption target remaining encrypted is sent to the recording/playback apparatus, which then decrypts and displays it. That is, whether performing the encryption/decryption process in the memory card or in the recordingplayback apparatus can be selected in accordance with the encryption volume, part, content and the like.
In the case when the encryption/decryption process is carried out in the recording/playback apparatus, if the encryption key is stored in the recording/playback apparatus, the recording/playback apparatus uses the stored encryption key. If the encryption key is stored in the memory card, it has to be sent to the recording/playback apparatus before the use.
(3) The embodiment assumes that an encryption key, such as SD_AUDIO.PLM, is always stored in the memory card and the recording/playback apparatus; if an appropriate encryption key is not stored therein, however, a warning message indicating accordingly may be shown on the display.
(4) A program to cause a CPU to execute processes for realizing respective functions of the memory card and the recording/playback apparatus described in the embodiment (see FIG. 1) may be delivered and distributed after being recorded on recording media, or through various communication channels. Such recording media include IC cards, optical discs, flexible discs, ROMs and flash memories. The delivered or distributed program is put to use by being stored, for example, in a memory readable by a CPU of an apparatus, and the respective functions of the memory card and recording/playback apparatus described in the embodiment can be realized by the CPU executing the program.

### Industrial Applicability

In data structures, recording media and playback apparatuses that record AV data and the like requiring copyright protection, the present invention is useful as an applicable technology for the case where control information for data to be protected also possibly includes content for copyright protection.

## Claims

1. Content data used by a playback apparatus having a display, and having a data structure in which a plurality of pieces of audio data to be played back are associated with pieces of encrypted code information which are created by encrypting with a predetermined algorithm pieces of code information, each of which indicates text to be shown on the display at a time of playback of a corresponding piece of the audio data.

2. The content data of Claim 1, wherein
the pieces of code information are different for each of the pieces of audio data.

3. The content data of Claim 2, wherein
the pieces of code information are information to be displayed during a period of time of playback of the corresponding piece of the audio data.

4. The content data of Claim 1, wherein
each of the pieces of code information corresponds to part of text to be displayed at the time of playback of the corresponding piece of the audio data.

5. The content data of Claim 1, wherein
in the data structure, the pieces of audio data are associated with pieces of access information used to access the associated pieces of audio data, and
the pieces of access information are not encrypted.

6. The content data of Claim 1, further including:
one or more play lists, each of which includes an order of playing back pieces of the audio data and an identification name of the play list, wherein
only the identification name is encrypted.

7. A memory card storing therein content data used by a playback apparatus having a display, wherein
the content data has a data structure in which a plurality of pieces of audio data to be played back are associated with pieces of encrypted code information which are created by encrypting, by a predetermined encryption key, pieces of code information, each of which indicates text to be shown on the display at a time of playback of a corresponding piece of the audio data, and
the memory card comprising:
a protected area accessible after authentication; and
a non-protected area accessible without the authentication, wherein
the predetermined encryption key is stored in the non-protected area.

8. A playback apparatus having a display and playing content data back, wherein
the content data has a data structure in which a plurality of pieces of audio data are associated with pieces of encrypted code information which are created by encrypting with a predetermined algorithm pieces of code information, each indicating text, and
the playback, apparatus comprising:
a playback unit operable to play back a piece of the audio data;
a decryption unit operable to decrypt a piece of the encrypted code information to create a piece of the code information; and
a display unit operable to show on the display, when the playback unit plays back a piece of the audio data, a piece of the code information created by the decryption unit by decrypting a piece of the encrypted code information associated with the piece of the audio data.

9. The playback apparatus of Claim 8, wherein
the content data is stored in one or more memory cards, each of which has a unique ID number, and
the playback apparatus further comprising:
a decryption-key storage unit storing therein ID numbers of the memory cards in association with decryption keys used by the decryption unit for decryption, wherein
the display unit shows on the display, when the playback unit plays back a piece of the audio data, a piece of the code information created by the decryption unit by decrypting a piece of the encrypted code information associated with the piece of the audio data using a decryption key stored, in the decryption-key storage unit, in association with an ID number of a memory card in which the piece of the audio data is stored.

10. The playback apparatus of Claim 9, further comprising:
a message unit operable to show a message on the display, wherein
the display unit causes the message unit to show the message in a case when the decryption key associated with the ID number of the memory card in which the piece of the audio data is stored is not stored in the decryption-key storage unit.

11. The playback apparatus of Claim 8, wherein
the content data further includes encrypted extended code information created by encrypting with a predetermined algorithm extended code information that indicates text, and
the playback apparatus further comprising:
an obtaining unit operable to obtain, from outside the playback apparatus, an instruction of whether to show the extended code information on the display, wherein
the display unit shows on the display, when the obtained instruction indicates to show the extended code information, the extended code information created by decrypting the encrypted extended code information.
